Europäisches Patentamt

European Patent Office

Office européen des brevets

(11) Veröffentlichungsnummer: **0 124 816 B1**

# (12) EUROPÄISCHE PATENTSCHRIFT

(45) Veröffentlichungstag der Patentschrift: **03.07.91**

(21) Anmeldenummer: **84104536.2**

(22) Anmeldetag: **21.04.84**

(51) Int. Cl.⁵: **G02F 1/19, G02F 1/133**

(54) **Anzeigevorrichtung.**

(30) Priorität: **05.05.83 GB 8312277**

(43) Veröffentlichungstag der Anmeldung:
**14.11.84 Patentblatt 84/46**

(45) Bekanntmachung des Hinweises auf die
Patenterteilung:
**03.07.91 Patentblatt 91/27**

(84) Benannte Vertragsstaaten:
**BE CH DE FR IT LI NL SE**

(56) Entgegenhaltungen:
**EP-A- 0 025 590**
**GB-A- 2 067 811**
**US-A- 3 910 681**

**IBM TECHNICAL DISCLOSURE BULLETIN,
Band 21, Nr. 11, April 1979, Seiten 4724-4726,
New York, US; A. AVIRAM et al.: "Optically
illuminating and electrically and thermally
addressing a liquid crystal display"**

**"Electronic Design" 14 (5.Juli 1974) Seiten
76-80**

(73) Patentinhaber: **STC PLC
10, Maltravers Street
London, WC2R 3HA(GB)**

(72) Erfinder: **Crossland, William Alden
15 School Lane
Harlow Essex(GB)**
Erfinder: **Brocklehurst, John Robert
26A Thorley Park Road
Bishop's Stortford, Herts.(GB)**
Erfinder: **Ayliffe, Peter John
150 Heath Row
Bishop's Stortford, Herts.(GB)**
Erfinder: **Atkinson, Arthur
4 Church Street
Addingham Nr.Ilkley, W.Yorks(GB)**

(74) Vertreter: **Driver, Virginia Rozanne et al
Page White & Farrer 54 Doughty Street
London WC1N 2LS(GB)**

## Beschreibung

Die Erfindung bezieht sich auf eine Flüssigkristall-Anzeigevorrichtung der im Oberbegriff des Patentanspruchs 1 angegebenen Art.

Aus dem Dokument 'IBM-Techn. discl. Bull.' 21 (1979), Seite 4724 bis 4726 ist eine Flüssigkristall-Anzeigevorrichtung bekannt, bei der an den Kanten der durchsichtigen Platte, die dem Betrachter zugewandt ist, Beleuchtungsmittel angeordnet sind, deren Licht durch Totalreflexion an der äußeren Fläche dieser durchsichtigen Platte bzw. an einer reflektierenden Fläche geführt ist, die auf der Rückseite der Flüssigkristallschicht angeordnet ist. Diese reflektierende Schicht bildet damit einen hellen Hintergrund, was in vielen Fällen für Anzeigevorrichtungen unerwünscht ist. Weiterhin ist die Anzahl der inneren Totalreflexionen aufgrund der geringen Dicke der zwischen der reflektierenden Schicht und der durchsichtigen Platte angeordneten Flüssigkristallschicht für vorgegebene Abmessungen der Anzeigefläche sehr groß, so daß es nur schwer möglich ist, großflächige Anzeigevorrichtungen auszuleuchten.

Aus dem Dokument 'Electronic Design' 14 (5. Juli 1974), Seiten 76 bis 80 sind weitere Ausführungsformen von Beleuchtungseinrichtungen für Flüssigkristall-Anzeigevorrichtungen bekannt. Bei einer Ausführungsform wird die Flüssigkristallschicht auf der Rückseite mit einer optischen Jalousie versehen und dahinter die Beleuchtungseinrichtung montiert. Die optische Jalousie läßt nur Licht innerhalb eines kleinen Winkelbereiches, der außerhalb des Sichtbereiches liegt, durch. Daher kann der Betrachter nicht direkt die Beleuchtungsquelle sehen, sondern er sieht nur die in den streuenden Zustand geschalteten Bereiche der Flüssigkristallschicht der Anzeigevorrichtung. Um eine gute Beleuchtung der gesamten Anzeigefläche zu erreichen, muß die Beleuchtungseinrichtung beim Einsatz einer optischen Jalousie sehr tief sein, wodurch der Vorteil der geringen Dicke von Flüssigkristall-Anzeigevorrichtungen wieder verloren geht. Bei einer anderen Ausführungsform, die der eingangs genannten Flüssigkristall-Anzeigevorrichtung entspricht, ist auf der Rückseite der Flüssigkristallschicht eine relativ dicke Platte oder ein Keil angeordnet, der von einer seiner Schmalseiten aus beleuchtet wird und auf dessen Rückseite eine schwarze Abdeckfläche angeordnet ist. Hierbei wird wiederum das Licht durch Totalreflexion zwischen der Außenseite der an der Vorderseite der Flüssigkristallschicht angeordneten dünneren Platte und der Außenseite der dickeren hinteren Platte geführt, wobei die relativ große Dicke der Platte die Anzahl der Totalreflexionen verringert. Die Außenseite der dickeren Platte oder des Keils bildet hierbei jedoch eine reflektierende Fläche, die in relativ großem Abstand von den im Betrieb in den streuenden Zustand geschalteten Bereichen dem Flüssigkristallschicht angeordnet ist, so daß sich Parallaxenprobleme ergeben. Weiterhin ist auch hier die Beleuchtungseinrichtung sowie ggf. die schwarze Rückfläche in erheblichem Abstand von der vorderen Platte der Anzeigevorrichtung angeordnet, so daß sich eine sehr große Bautiefe ergibt.

Der Erfindung liegt die Aufgabe zugrunde, eine Flüssigkristall-Anzeigevorrichtung der eingangs genannten Art zu schaffen, die eine Bauweise mit geringer Tiefe erlaubt, ohne daß Parallaxenprobleme oder Schwierigkeiten einer Ausleuchtung der gesamten Höhe oder Breite der Anzeigefläche auftreten.

Diese Aufgabe wird durch die im kennzeichnenden Teil des Patentanspruchs 1 angegebenen Merkmale gelöst.

Vorteilhafte Ausgestaltungen und Weiterbildungen der Erfindung ergeben sich aus den Unteransprüchen.

Dadurch, daß die dickere Platte die vordere Platte der Anzeigevorrichtung bildet, während die hintere Platte sehr dünn ausgebildet werden kann, ergibt sich eine weitgehende Reduzierung des Parallaxenproblemes und die Anzahl der inneren Totalreflexionen des Lichtes beim Ausleuchten der gesamten Höhe oder Breite der Anzeigefläche wird reduziert.

Gemäß einer bevorzugten Ausgestaltung der Erfindung ist die vordere dicke Platte eine zusammengesetzte Platte, deren äußere Platte mit der inneren Platte in optischem Kontakt steht. Die zusammengesetzte Platte weist dann die gewünschte größere Dicke auf. Der optische Kontakt zwischen den Platten der zusammengesetzten Platte kann durch eine optische Koppelschicht hergestellt werden, die aus einer Klebeschicht oder aus einer flüssigen Schicht mit niedrigem Dampfdruck bestehen kann.

Die Beleuchtungsmittel sind dabei vorzugsweise durch eine oder mehrere längliche Lampen gebildet, deren Achsen parallel zu der oder zu den Kanten der äußeren Platte verlaufen.

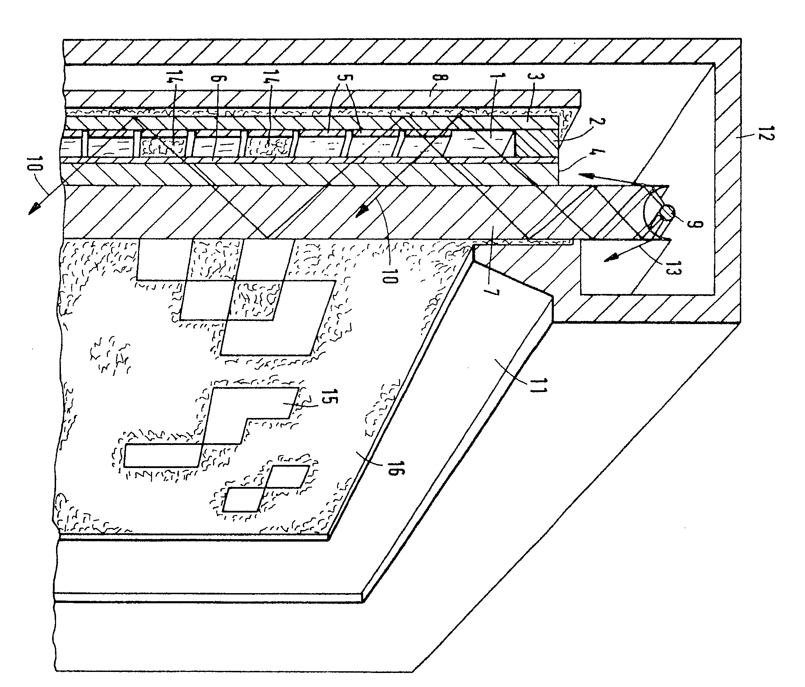

Ein Ausführungsbeispiel der Erfindung wird im folgenden anhand der Zeichnung näher erläutert, die einen Schnitt durch einen Teil einer perspektivisch dargestellten Ausführungsform der Flüssigkristall-Anzeigevorrichtung zeigt.

Die in der Zeichnung dargestellte Ausführungsform der Flüssigkristall-Anzeigevorrichtung verwendet eine matrixartige Flüssigkristallzelle, deren Leuchtflecke koordinatenweise adressiert werden. Eine bevorzugte Anzeigeart für diese Anordnung ist von D. Coates et al im Aufsatz mit dem Titel 'Electrically induced scattering textures in smectic A-phases and their electrical reversal' im Journal of Physics D: Applied Physics, Volume 11, Seiten 2025-34, und in der britischen Patentschrift Nr. 1557199 beschrieben. Dabei wird mit einer Wechselspannung der smektische Flüssigkristall mit positiver dielektrischer Anisotropie in homöotroper Ausrichtung vom klaren Zustand in einen Zustand dynamischer Streuung geschaltet, der bei Wegnahme des Feldes in einen statischen fokal-konischen Streuzustand fällt. Es wird eine Wechselspannung mit einer höheren Frequenz benutzt, um wieder den klaren Zustand homöotroper Ausrichtung herzustellen. In der britischen Patentschrift ist auch die Möglichkeit erwähnt, einen thermischen Zyklus als alternativen Weg zum Herstellen des klaren homöotropen Zustandes zu benutzen. Dies ist genauer von M. Hareng er al im Aufsatz 'Flat Matrix Addressed Smectic Liquid Crystal Display' in Digest of Technical Papers of the 1981 Society of Information Display International Symposium (New York, USA) auf der Seite 106 beschrieben. Dabei geschieht das Löschen Zeile für Zeile durch Stromimpulse auf den transparenten Zeilenelektroden, die örtlich joulsche Wärme erzeugen. Alternativ kann die Vorrichtung auch mit Impulsen gemäß der in der GB-A 2067811 beschriebenen Art geschaltet werden.

In der Figur ist eine hermetisch eingeschlossene Flüssigkristallschicht 1 dargestellt. Die Flüssigkristallschicht 1 wird von einer hinteren transparenten Platte 3 und einer vorderen transparenten Platte 4, zwischen den einen Kantenabdichtung 2 vorhanden ist, abgeschlossen. Der Abstand zwischen diesen Platten und damit die Dicke der Flüssigkristallschicht 1 ist über die gesamte Anzeigefläche im wesentlichen gleich und dies wird in bekannter Art durch die Einlage einer kurzen Länge einer (nicht dargestellten) Glasfaser mit gleichmäßigem Durchmesser erreicht. Die inneren Oberflächen der Platten 3 und 4 sind mit Sätzen von Zeilen- und Spaltenelektroden 5 bzw. 6 versehen. Diese Elektroden bestehen aus Indium-Zinn-Oxyd und ihre Anordnung erlaubt, die Leuchtflecken individuell koordinatenweise zu adressieren.

Die hintere Platte 3 ist dünner als die vordere Platte 4, damit die hintere Platte leichter an die Oberflächenkontur der Innenseite der vorderen Platte 4 anpassen zu können. Normalerweise besteht die dickere Platte 4 auf Glas und ist typischerweise zwischen 2 und 3 mm dick, während die dünnere Platte, wenn sie aus Glas besteht, typischerweise zwischen 1 und 1,5 mm dick ist.

Bei einer noch geringeren Dicke der dünneren Platte wird anstatt Glas ein Polyesterfilm verwendet. Die mit der Flüssigkristallschicht 1 in Berührung stehenden Oberflächen der Platten sollen so ausgestattet sein, daß sie die spezifische Art der Molekularausrichtung der Flüssigkristallmoleküle des jeweiligen Flüssigkristalls an diesen Oberflächen fördern. Die Behandlung der Oberflächen zur Erzielung der erforderlichen Ausrichtung geschieht in bekannter Art. In dem beschriebenen besonderen Beispiel der smektischen Anzeigeart erzeugt diese Behandlung eine homöotrope Ausrichtung.

Um die Dicke der vorderen Platte besonders groß zu machen, kann die vordere Platte die innere Platte einer zusammengesetzten Platte bilden, wobei die vordere Oberfläche der vorderen Platte 4 in optischen Kontakt mit einer äußeren lichtführenden durchsichtigen Platte 7 gebracht wird, die aus Kunststoff bestehen kann und über die Kanten inneren Platte 4 der zusammengesetzten vorderen Platte hinausragt. Eine Trägerplatte 8 mit einer mattierten schwarzen Oberfläche ist in Abstand zur hinteren Oberfläche der hinteren Platte 3 angeordnet. Licht, zum Beispiel aus einer Lichtquelle mit länglichen Lampen 9, die längs verschiedener Kanten der äußeren Platte 7 angeordnet sein können, wird so in diese Platte 7 geführt, daß ein wesentlicher Anteil eine innere Totalreflexion erfährt, wie es durch die Strahlen 10 dargestellt ist. In den Bereichen, in denen die äußere Platte 7 im optischen Kontakt mit der inneren Platte 4 steht, ist die Totalreflexion an der hinteren Oberfläche der äußeren Platte 7 unterdrückt. Dafür erfolgt die Totalreflexion der Lichtstrahlen an der hinteren Oberfläche der hinteren Platte. Das unter einem zu kleinen Winkel für eine Totalreflexion in die Platte 7 eintretende Licht der Lampen 9, zum Beispiel der Strahl 13, wird von einer am Gehäuse 12 angebrachten Schrägfläche 11 abgehalten, um den Betrachter der Anzeigevorrichtung nicht zu blenden.

Wenn die gesamte Flüssigkristallschicht klar ist, erreicht kein Licht von den Lampen 9 den Betrachter, und die Anzeigevorrichtung erscheint durch die schwarze Oberfläche der Trägerplatte 8 schwarz. Wenn jedoch ein Teil der Flüssigkristallschicht in den Streuzustand geschaltet ist, wie dies mit 14 in der Zeichnung dargestellt ist, so wird das durch diesen Bereich laufende Licht gestreut und ein Teil des gestreuten Lichtes tritt nach außen und erreicht das Auge des Betrachters. Daher ist der Betrachter in der Lage, diese Streubereiche als leuchtende Flecke vor einem dunklen Feld 16 zu sehen. Es hat sich gezeigt, daß weil die Streudichte eines Leuchtfleckes sehr gering ist, die wahrgenommene Luminiszenzintensität eines Leuchtfleckes 15 nahe der Mitte der Anzeigevorrichtung, die etwa 28 cm x 18 cm mißt, nicht merkbar durch andere streuende Leuchtflecke zwischen ihr und einer der Lampen 9 gedämpft wird. Für eine Anzeigevorrichtung mit den Maßen 23 cm x 18 cm zeigt sich, daß eine ausreichende Beleuchtung durch ein einziges Paar von 8 Watt Leuchtstofflampen, die einen Durchmesser von 16 mm und eine Länge von 30 cm hatten, und die an gegenüberliegenden Kanten der Platte 7 montiert waren, ausreichte. Für andere Anwendungen wird je eine Leuchtstofflampe entlang jeder Kante der Platte 7 bevorzugt.

Dadurch, daß die lichtführende durchsichtige äußere Platte 7 in optischen Kontakt mit der dickeren Platte 4 der beiden die Flüssigkristallschicht 1 einschließenden Platten steht, die die vordere Platte darstellt, ergibt sich der Vorteil, daß die Flüssigkristallschicht so nahe wie möglich an die reflektierende Oberfläche hinter ihr gebracht werden kann. Hierdurch werden Probleme mit der Parallaxe verringert, die eine Verwechslung zwischen einem gegebenen Leuchtfleck und seinem Abbild auf der reflektierenden Oberfläche hervorrufen würde.

## Ansprüche

1. Flüssigkristall-Anzeigevorrichtung vom Streutyp mit einer zwischen einer vorderen und einer hinteren durchsichtigen Platte (3 und 4,7) und einer Umfangsdichtung (2) angeordneten Flüssigkristallschicht (1) als Anzeigefläche, mit Beleuchtungsmitteln (9), die Licht durch den Seitenkantenbereich einer der beiden durchsichtigen Platten (3 und 4,7) in diese Platten und von dort in die Flüssigkristallschicht (1) einleiten, wobei das Beleuchtungslicht durch Reflexionen an den äußeren Oberflächen der beiden durchsichtigen Platten (3 und 4,7) über die Anzeigefläche geführt und zumindestens in deren Bereich dadurch am Abstrahlen durch diese Oberflächen hinduch gehindert ist, daß das Beleuchtungslicht außerhalb der streuend geschalteten Bereiche durch Totalreflexion an den äußeren Oberflächen der beiden durchsichtigen Platten (3 und 4,7) geführt ist, während das in den streuend geschalteten Bereichen der Flüssigkristallschicht (1) gestreute Licht die Anzeigevorrichtung nach vorne verläßt, und mit einer Trägerplatte (8), die mit Abstand von der hinteren durchsichtigen Platte (3) angeordnet ist und zumindestens im Bereich der Anzeigefläche eine dunkel gefärbte Oberfläche als optischen Hintergrund aufweist, dadurch **gekennzeichnet,** daß die beiden durchsichtigen Platten (3 und 4,7) eine unterschiedliche Dicke aufweisen und daß die dickere Platte (4,7) die vordere Platte der Anzeigevorrichtung bildet.

2. Flüssigkristall-Anzeigevorrichtung nach Anspruch 1, dadurch **gekennzeichnet,** daß die dickere Platte eine zusammengesetzte Platte ist, deren äußere Platte (7) mit der inneren Platte (4) in optischem Kontakt steht, wobei die Totalreflexion des Beleuchtungslichtes auf der Vorderseite der äußeren Platte (7) erfolgt.

3. Flüssigkristall-Anzeigevorrichtung nach Anspruch 2, dadurch **gekennzeichnet,** daß die äußere Platte (7) über die Kanten der inneren Platte (4) hinausragt.

4. Flüssigkristall-Anzeigevorrichtung nach Anspruch 2 oder 3 dadurch **gekennzeichnet,** daß die Beleuchtungsmittel aus einer oder mehreren länglichen Lampen (9) bestehen, deren Achsen parallel zu der (den) Kante(n) der äußeren Platte (7) verlaufen.

5. Flüssigkristall-Anzeigevorrichtung nach Anspruch 4, dadurch **gekennzeichnet,** daß die längliche Lampe eine Leuchtstofflampe ist.

6. Flüssigkristall-Anzeigevorrichtung nach einem der vorhergehenden Ansprüche, dadurch **gekennzeichnet,** daß die Trägerplatte (8) mit der dunkel gefärbten Oberfläche ein schwarzes mattiertes Aussehen hat.

7. Flüssigkristall-Anzeigevorrichtung nach einem der vorhergehenden Ansprüche, dadurch **gekennzeichnet,** daß die Anzeigevorrichtung koordinatenweise adressierbar ist und Leuchtflecke erzeugt, die durch die Schnittpunkte von einem Satz von Zeilenelektroden (5) auf der einen Seite der Flüssigkristallschicht (1) mit einem Satz von Spaltenelektroden (6) auf der anderen Seite bestimmt werden.

8. Flüssigkristall-Anzeigevorrichtung nach einem der vorhergehenden Ansprüche, dadurch **gekennzeichnet,** daß die Anzeigevorrichtung einen smektischen Flüssigkristall aufweist.

## Claims

1. A liquid crystal display device of scattering mode type comprising a liquid crystal layer (1) as display layer disposed between a front and a rear transparent sheet (3 and 4, 7) and a perimeter seal (2); display illumination means (9) which direct light through the side edge region of one of the two transparent sheets (3 and 4, 7) into this sheet and from there into the liquid crystal layer (1), the said illumination light being directed over the said display surface by reflections at the outer surfaces of the two transparent sheets (3 and 4, 7) and light being prevented from emerging through these outer surfaces, at least in the regions of the liquid crystal other than those switched into the scattering condition, by directing the illumination light by total reflection at the outer surfaces of both transparent sheets (3 and 4, 7), whereas the light scattered in the regions of the liquid crystal layer switched into the scattering condition emerges from the display device from the front side; and a backing sheet (8) spaced from the rear transparent sheet (3) and having, at least in the region of the display surface, a dark coloured surface as optical background, characterized in that the two transparent sheets (3 and 4, 7) have different thicknesses and in that the thicker sheet (4, 7) forms the front sheet of the display device.

2. A liquid crystal display device as claimed in claim 1,
characterized in that the thicker sheet is a composite plate, the outer sheet (7) of which is in optical contact with the inner sheet (4), and the total reflection of the illumination light occurs on the front side of the outer sheet (7).

3. A liquid crystal display device according to claim 2,
characterized in that the outer sheet (7) extends beyond the edges of the inner sheet (4).

4. A liquid crystal display device according to claim 2 or claim 3,
characterized in that the illumination means consists of one or more elongated lamps (9) whose axes extend parallel to the edge or edges of the outer sheet (7).

5. A liquid crystal display device according to claim 4,
characterized in that the elongated lamp is a fluorescent lamp.

6. A liquid crystal display device as claimed in any of the preceding claims, characterized in that the backing sheet (8) having a dark coloured surface has a matt black appearance.

7. A liquid crystal display device as claimed in any of the preceding claims, characterized in that the display device is addressable on a coordinate basis and provides pixels defined by the intersection of a set of row electrodes (5) on one side of the liquid crystal layer (1) with a set of column electrodes (6) on the other side.

8. A liquid crystal display device as claimed in any of the preceding claims, characterized in that the display device comprises a smectic liquid crystal.

**Revendications**

1. Dispositif d'affichage à cristaux liquides du tue à diffusion comprenant une couche de cristaux liquides (1) servant d'affichage, disposée entre des plaques transparentes avant et arrière (3 ; 4, 7) et un joint périphérique (2), des moyens d'éclairage (9) qui éclairent la couche de cristaux liquides (1) par l'intermédiaire de l'éclairage latéral d'une des plaques transparentes (3 ; 4, 7) de manière que la lumière d'éclairage soit guidée jusqu'à l'affichage par réflexion sur les faces externes des deux plaques transparentes (3 ; 4, 7), du moins dans les régions de l'affichage où la transmission à travers ces faces est empêchée, la lumière d'éclairage étant guidée par réflexion totale sur les faces externes des deux plaques transparentes (3 ; 4, 7) en dehors de domaines excités pour diffuser, tandis que la lumière diffusée dans les domaines excités pour diffuser de la couche de cristaux liquides (1) quitte le dispositif d'affichage vers l'avant, le dispositif d'affichage comprenant une plaque support (8) disposée à distance de la plaque transparente arrière (3) et présentant au moins, dans la région d'affichage, une surface sombre servant de fond optique, caractérisé en ce que les deux plaques transparentes (3 ; 4, 7) présentent une épaisseur différente et en ce que la plaque plus épaisse (4, 7) constitue la plaque avant du dispositif d'affichage.

2. Dispositif d'affichage à cristaux liquides selon la revendication 1, caractérisé en ce que la plaque plus épaisse est une plaque double dont la plaque extérieure (7) est en contact optique avec la plaque intérieure (4), de manière qu'il se produise une réflexion totale de la lumière d'éclairage sur le côté avant de la plaque extérieure (7).

3. Dispositif d'affichage à cristaux liquides selon la revendication 2, caractérisé en ce que la plaque extérieure (7) dépasse des bords de la plaque intérieure (4).

4. Dispositif d'affichage à cristaux liquides selon l'une des revendications 2 ou 3, caractérisé en ce que les moyens d'éclairage comprennent une ou plusieurs lampes allongées (9), dont les axes sont parallèles à au moins un des côtés de la plaque extérieure (7).

5. Dispositif d'affichage à cristaux liquides selon la revendication 4, caractérisé en ce que la lampe allongée est une lampe à fluorescence.

6. Dispositif d'affichage à cristaux liquides selon l'une quelconque des revendications précédentes, caractérisé en ce que la plaque support (8) comprenant une surface sombre a un aspect noir dépoli.

7. Dispositif d'affichage à cristaux liquides selon l'une quelconque des revendications précédentes, caractérisé en ce que le dispositif d'affichage est adressable matriciellement pour provoquer des taches lumineuses qui sont déterminées par des intersections entre un ensemble d'électrodes de ligne (5) d'un côté de la couche de cristaux liquides (1) et un ensemble d'électrodes de colonne (6) de l'autre côté.

8. Dispositif d'affichage à cristaux liquides selon l'une quelconque des revendications précédentes, caractérisé en ce que le dispositif d'affichage comprend des cristaux liquides smectiques.